(19) Europäisches Patentamt
European Patent Office
Office européen des brevets

(11) Publication number: 0 084 732
A1

(12) # EUROPEAN PATENT APPLICATION

(21) Application number: 82306918.2

(22) Date of filing: 23.12.82

(51) Int. Cl.³: B 60 T 1/06

(30) Priority: 30.12.81 US 335948

(43) Date of publication of application: 03.08.83
Bulletin 83/31

(84) Designated Contracting States: DE FR GB IT

(71) Applicant: DRESSER INDUSTRIES INC., The Dresser Building Elm & Akard Streets P.O. Box 718, Dallas Texas 75221 (US)

(72) Inventor: Houtz, Kenneth Eugene, 101 Big Oaks Road, Streamwood Illinois 60103 (US)
Inventor: Pratt, William Jordan, 4436 Rushmore Dr. N.E., Cedar Rapids Iowa 52402 (US)
Inventor: King, Robert Eugene, 18125 W. TwinLakes, Wildwood Illinois 60030 (US)

(74) Representative: Wain, Christopher Paul et al, A.A. THORNTON & CO. Northumberland House 303-306 High Holborn, London WC1V 7LE (GB)

(54) **Axle drive and brake assembly.**

(57) A vehicle drive axle assembly utilizing a planetary gear drive (56) incorporating a brake pack (78) between the axle shaft sun gear (60) and the planet gear carrier (42) at the outboard end of the axle shaft (30) in an outboardly open cavity (76). A single cover plate (46) containing the brake actuating apparatus (88) is removably secured to the planet gear carrier (42) to provide access to the brake pack. Thus, no part of the planetary gear system (56) need be removed or disturbed in order to service the brake pack (78) and both sets of brake discs (80, 82) will rotate through the lubricating oil coolant during operation providing increased and uniform heat transfer.

18
43
62
41
40
70
42
45
56
71
72
68
52
48
50
34
36
35
110
129
128
37
39
32
180
178
185
186
187
183
182
80
81
83
82
33
30
67
66
148
122
124
90
87
92
88
86
46
98
94
60
144
96
103
38
120
78
118
65
64
108
101
107
112
111
100
74
76
61
63
117
44
113
146
115
114

EP 0 084 732 A1

## AXLE DRIVE AND BRAKE ASSEMBLY

In many land vehicles, particularly large vehicles such as wheel loaders, there is a planetary gear reduction system at the vehicle wheel on the drive axle in order to effect a final gear reduction in the drive. The planetary system typically provides a sun gear keyed to the rotating drive axle shaft, a ring gear keyed or splined to a rotationally fixed part of the vehicle, typically to a spindle fixed on the drive axle housing, and a planetary gear carrier rotatably carrying a plurality of planet gears, each of which is engaged between the sun and ring gears. The planet gear carrier is connected to or formed as part of the vehicle wheel hub assembly which is rotatably mounted on the axle housing or spindle and the vehicle wheel or tire is connected to the hub assembly to rotate therewith.

The planetary gear system reduces the speed of the rotating drive axle shaft by a ratio of between five and ten to one. This has great benefit in that it reduces the overall torque required to be transmitted by the axle shaft and all drive components upstream of the planetary drive assembly and substantially reduces the size and cost of these components. Another benefit is that it is possible to brake the vehicle wheel by means of a brake pack disposed within the planetary gear system, which utilizes the components of the vehicle itself without bringing into play an additional high cost braking mechanism used solely for braking. Also, since braking is done through the large gear reduction, the same amount of braking torque can be produced with fewer or smaller diameter brake discs than if the wheel were directly braked to the spindle.

The Sidles, Jr. et al U.S. Patent No. 4,142,615 illustrates such a braking arrangement. The brake pack is located in a cavity formed within the stationary spindle and includes two sets of interleaved discs that are keyed or splined respectively to the stationary spindle and to the rotatable drive axle shaft. The Keese U.S. Patent No. 4,037,694 discloses a similar braking arrangement except that the brake pack is located interiorly of the planet carrier between the ring gear, which is splined to the stationary spindle, and the sun gear, which is splined to the axle shaft. In both designs, a piston is activated by appropriate fluid pressure to act against the brake pack and thereby cause braking of the rotating shaft relative to the stationary spindle.

The problem with the arrangements taught in these patents is that it can be quite difficult to get at and replace or service the brake pack. For example, the entire planet gear carrier, which may weigh several hundred pounds, must be removed from the wheel assembly in order to get at the brake pack. In normal use, the planetary system has an operating life that is substantially longer than the brake pack. Consequently, disassembly of the planetary drive system in order to service the brake pack is quite undesirable and may promote contamination of the system especially when service is done under field conditions. The feature of having the vehicle brake in part located in the planetary gear system is highly desirable because the brakes may be serviced without removal of the wheels which, in construction equipment, are very large and cumbersome.

A further problem with the prior art arrangements is that the lubricating oil in the hub assembly, which also functions as a coolant, communicates with the differential housing of the vehicle between the axle shaft and the axle housing and so the brake disc cavity which surrounds the axle shaft is only partially filled. This produces poor heat transfer characteristics in the one brake disc set which is rotatably fixed relative to the ring gear or spindle since the bottom portion of the discs are in cooling oil which the top portions are not. Not only is there poor heat transfer from the top side of these discs which would increase the wear rate of the friction material thereon but also the temperature differential caused by the non-uniform heat transfer therefrom could create distortions in the discs especially under extreme operating conditions.

The present invention is characterised in that a brake pack is disposed between the planet carrier and the drive shaft, the brake pack comprising two interleaved sets of axially movable brake discs, one of the disc sets being mounted for rotation with the axle shaft and the other disc set being mounted for rotation with the planet carrier; and brake actuating means operatively associated with the brake pack to selectively effect frictional contact between the brake disc sets and thereby braking the wheel hub relative to the axle housing.

The specific arrangement locates the brake pack between the axle shaft sun gear and the planet gear carrier or wheel hub of the vehicle at the outboard end of the drive shaft. The brake pack fits annularly of the axle shaft in an outboardly open cavity in the planetary gear carrier and a single cover plate is removably secured to the planet gear carrier to provide access to the brake pack and the operating mechanism therefor. Thus, no part of the planetary gear system need be removed or disturbed in order to service the brake pack. In addition to the ease of servicing, since braking is accomplished between two rotating members, the sun gear and planet carrier, during operation both sets of brake discs will rotate through the lubricating oil coolant in the lower half of the brake disc cavity, thereby providing increased and uniform heat transfer from the brake discs. This promotes smoother braking of the vehicle and longer life in the disc pack.

The invention will be better understood from the following description of a preferred embodiment thereof given by way of example only, reference being had to the accompanying drawings, wherein:

FIGURE 1 is an elevational view of a wheel loader vehicle incorporating the improved axle drive and brake arrangement in at least one and preferably all of the wheels of the vehicle;

FIGURE 2 is an enlarged horizontal sectional view taken through the axle assembly of one of the wheels of the vehicle of Figure 1, along the line 2-2 thereof, and showing the important aspects of the invention;

FIGURE 3 is an enlarged vertical sectional view of the upper portion of the axle assembly of one wheel of Figure 1, taken along the line 3-3 thereof, being rotated $90^{\circ}$ from Figure 2, except deleting the planetary drive and brake components, and showing the lubricating oil flow arrangement used in the axle assembly; and

FIGURE 4 is a schematic view of the axle fluid system.

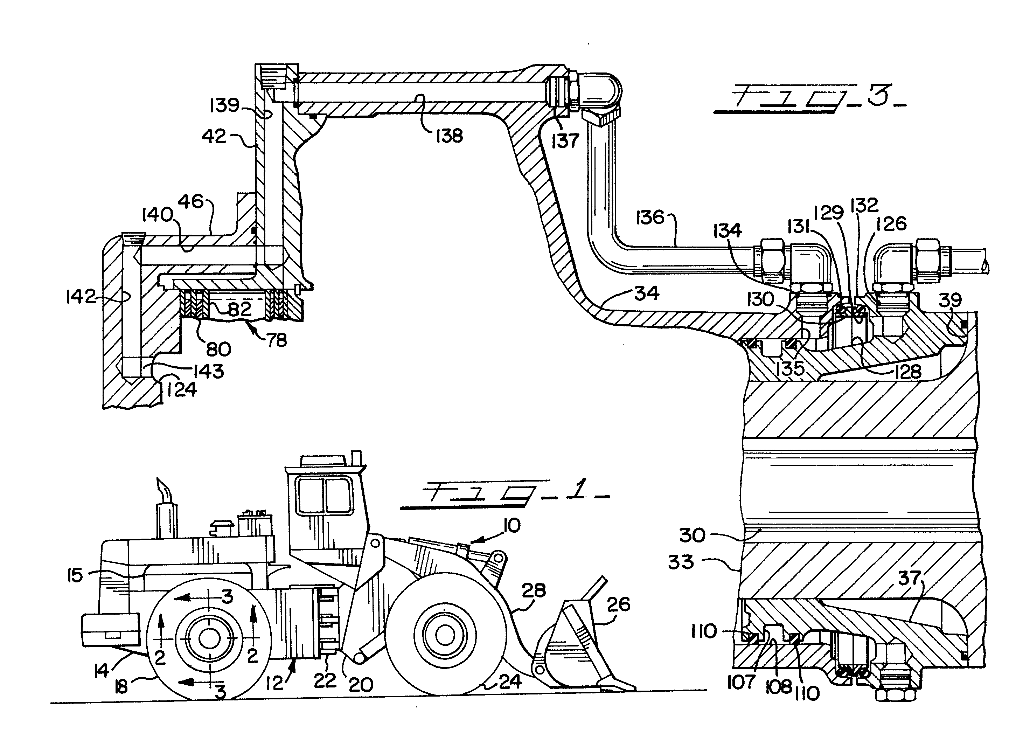

Referring now to the drawings, there is shown in Figure 1, a wheel loader 10 having an articulated frame 12, the rear portion 14 of which contains an engine 15 and is supported by rear wheels 18. The front portion 20 of the frame is pivoted at 22 to the rear frame portion 14 and is supported by front wheels 24. A loader bucket 26 is mounted to the end of lift arms 28 supported by the front frame 20.

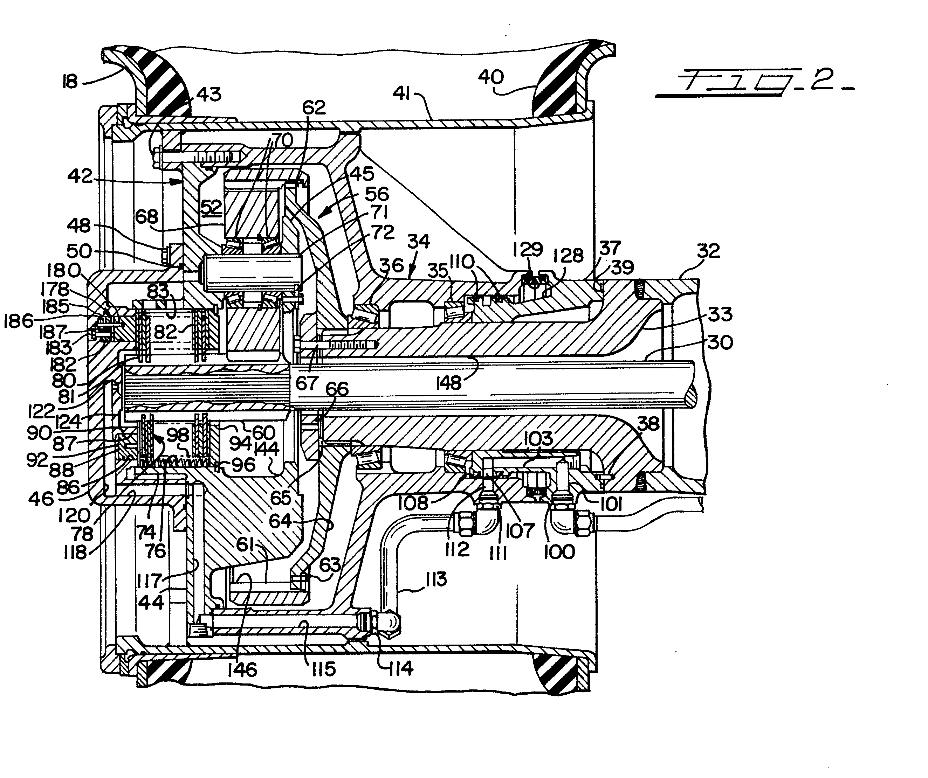

The invention is directed to an axle drive and braking arrangement incorporating a planetary gear system that can be used in conjunction with any of the wheels illustrated in Figure 1 and preferably on all four of the wheels. Referring to Figure 2, a drive axle shaft 30 which is driven from the engine 15 through a transmission and a differential (not illustrated), is supported to rotate within a non-rotating axle and differential housing, portions thereof being shown at 32, trunnion mounted on a longitudinal axis to the frame 12 of the vehicle. An elongated spindle 33 having an axial bore is welded or otherwise nonrotatably secured in outwardly extending relation from the axle housing. A wheel hub assembly 34 is rotatably mounted on the spindle 33 as by inner and outer bearings 35 and 36, the inner bearing 35 abutting a spacer ring 37, fixed against rotation as by pin 38, circumferentially disposed about the spindle and abutting on exterior shoulder 39 thereon. The spacer ring 37 thus locates the bearing 35 without adding a stress concentrating small radius shoulder to the spindle at the bearing mounting. As will be obvious from the drawing, the spacer ring 37 has many other functions which will be described subsequently. The outer diameter of spindle 33 is reduced axially outwardly to permit easy installation of the inner bearing 35 thereon and terminates in a splined end beyond the outer bearing 36.

The tire 40 of the vehicle wheels 18 or 24 is secured in place on a peripheral rim assembly 41 secured to the wheel hub assembly 34 exteriorly of a planet carrier 42, as by a large number of circumferentially spaced bolts 43 extending through both the rim and carrier into taps in the hub assembly, so that both will rotate with the hub assembly relative to the spindle 33 and stationary axle housing 32. The planet carrier 42 is a one piece casting disposed about the axle shaft 30 and has an exterior radial wall 44 and an interior radial wall 45. A cover 46 having a flanged outer perimeter sealed by 0 ring 50 is secured by a plurality of removable bolts 48 to the exterior radial wall 44 of the planet carrier 42. Thus, the hub assembly 34 has an interior chamber 52 partially enclosed by the planet carrier 42 and the cover 46.

A planetary gear drive assembly 56 is disposed in the hub chamber 52 between the rotating axle shaft 30, the stationary spindle 33 and the planet gear carrier 42 which carries the wheel hub. The planetary gear system includes a sun gear 60 keyed to or formed integrally on the axle shaft 30 at its outboard end and a ring gear 61 keyed against rotation to splines 62 on the peripheral edges of ring gear carrier 64, and secured against axial movement by bolts 63. The inner portion of the carrier 64 is keyed by internal spines 65 to the splined end of the spindle 33. An annular retainer plate 66 attached to the end of the spindle 33 by bolts 67 in axial taps therein retains the ring gear carrier 64 on the spindle 33. The hub of the ring gear carrier 64 further functions as a spacer working against the inner race of the outer wheel hub bearing 36 so that the bearing 35, hub 34, bearing 36, and spacer ring 37 are in continuous abutment to the spindle shoulder 39, shims being disposed between the spindle 33 and the ring gear retainer plate 66 to provide the desired amount of preload on the bearings.

The planetary gear drive assembly 56 further includes a plurality of circumferentially spaced planet gears 68 (only one being shown) engaged with the sun gear 60 and with the ring gear 61, each planet gear being supported rotatably by bearings 70 on a stub shaft 71 secured between the radial walls 44 and 45 of the planet gear carrier 42, being locked therein by a bolted plate 72 received in a corresponding groove in the stub shaft 71. Thus, the rotation of the axle shaft 30 and sun gear 60 causes the planet gears 68 to rotate, and the planet gear carrier 42 to rotate in turn relative to the stationary ring gear 61. The speed reduction ratio can be quite high in such a planetary gear arrangement, on the order of about eight to one for the arrangement shown, so that the wheel hub 34 is rotated at a slower speed, but with higher torque, than the input speed of the axle shaft 30.

In accordance with the invention, the planet gear carrier 42 has an integrally cast annular wall 74 disposed axially and concentrically about the outboard end of the axle shaft 30 and defining a cylindrical cavity 76 opening outboardly or endwardly of the drive shaft. A brake pack 78 is fitted within the cavity 76 and includes two sets of discs 80 and 82 interfitted with one another. Each disc 80, which is provided with friction material on its surfaces disposed to engage the discs 82, has an internal spline that cooperates with the axially extended teeth 81 of the sun gear 60 thereby keying all the discs 80 to the axle shaft 30 while allowing axial movement thereon. The friction material on the disc 80 is grooved in a crosshatch pattern to assist in drawing oil between the discs 80, 82. Each disc 82, which has a metallic surface disposed to engage the discs 80, has an exterior spline that cooperates with a mating internal spine 83 on the annular wall 74 of the planet gear carrier 42 so that all of the discs 82 are keyed to the planet carrier while being movable axially thereon. Since both sets of discs rotate, the materials of the discs 80, 82 could be interchanged with little effect, a further advantage of the invention.

A brake actuating means is disposed in the planetary gear cover 46 which has a pair of spaced annular walls 86 and 87 defining a groove opening toward the brake pack cavity 76 which is axially and concentrically disposed relative to the axle shaft 30. An annular piston 38 fits between the annular walls 86 and 87, seals 90 in the piston walls establishing rearwardly of the piston and remotely from the brake pack 78, an annular pressure chamber or cylinder 92 for fluid actuation of the brakes. An annular backing plate 94 is disposed in the brake pack cavity 76 on the inboard end of the brake pack 78 and a split ring 96 fitted within an annular groove in the annular wall 74 of the planet gear assembly 42 holds the backing plate 94 against inboard axial movement. Optionally, the ring 96 and even plate 94 could be integral with the planet carrier 42. A plurality of coiled compression springs, one of which is shown at 98, are located between the outboardmost brake disc 82 and the backing plate 94 for the purpose of providing a mechanical release of the brake pack 78 when the brake cylinder 92 is depressurized. It will be seen that upon pressurizing the annular brake cylinder 92, the annular brake piston 88 is driven axially inboard along the axle shaft and against the brake pack 78 causing the two sets of brakes discs 80 and 82 to frictionally engage each other. Therefore, in the brake-engaged position, the axle shaft 30 and the sun gear 60 integral therewith is held against rotation relative to the planet gear carrier 42. When any two components of a three component planetary gear system are stopped relative to one another, the entire planetary gear system is stopped Accordingly, by braking the relatively rotating members, i.e., the planet carrier and the sun gear, the planet gear carrier becomes braled relative to the fixed ring gear and, accordingly, the wheel hub assembly 34 becomes braked relative to the fixed spindle 33 or the frame 12 of the vehicle.

Automatic adjusting means are also incorporated in the cover assembly to preclude the unlimited release of the brake pack 78 upon its disengagement. This is accommodated by means of a slack adjuster 178 which includes a dowel pin 180 secured to the annular piston 88 and slidingly supported within a plug 182 held by a bolt 183 to the radial wall of the cover 146 and defining a cavity therebetween around the dowel pin 180 which receives a washer 185 positioned with clearance over the dowel pin. A compression spring 187 mounted in the plug 182 engages one edge of the washer 185 and forces it into a canted position so that the inner portion of the washer 185 engages the dowel pin while the outer surface of the washer opposite the compression spring engages a raised corner in the cover 46 as at 186.

Upon pressurization of the brake cylinder 92 and the axial displacement of the piston 88, the dowel pin 180 is caused to slide within the washer 185 and possibly shift its position inboardly relative to the washer. Upon depressurization of the cylinder 92, the springs 98 release the brake and cause the brake piston 88 to be moved axially away from the brake pack 78. The washer 187 strikes the cover corner 186 and cants causing the inner diameter of the washer to engage the dowel pin 180 thus precluding the complete return of the brake piston 88 into the cylinder 92. This automatically compensates for wear of the brake pack discs 80 and 82. Three or more of the slack adjuster assemblies 178 can be equally spaced around the circumference of the cover.

The operating fluid for actuating the brake piston 88 is supplied to the drive axle assembly from a single fluid system providing brake apply pressure, cooling and lubricating fluid, and differential gear lubrication, which will be described in detail hereinafter, to an input port 100 in the spacer ring 37 disposed about the spindle 33 inboard of the wheel hub assembly 34. The port 100 communicates via a radial passage 101 with an axially extending passage 103 in the spacer ring. The outside diameter of the nonrotatable spacer ring 37 reduces in size outboardly to an outboard end telescoping within the wheel hub assembly 34 and thereat is provided with an annular groove 107 defining a cavity between the hub assembly and spacer ring opened to the axial passage 103 and to the annular inner wall 108 of the hub assembly. Square section metal filled ring seals 110 of the type conventionally used in transmissions are located on opposite sides of annular groove 107 to maintain a pressurized fluid seal of the groove 107 while allowing the wheel hub assembly 34 to rotate relative to the spacer ring 37 and spindle 33. On the external side of the wheel hub 34, another port 111 communicates via radial passage 112 with the annular wall 108 of the hub and cavity. The wheel hub port 111 communicates by a pressure tube 113 with a port 114 at the entrance of an axially extending passage 115 in the circumferential wall of the hub assembly 34 which extends into the planet gear carrier 42. The radial wall 44 of the planet gear carrier 42 in turn is provided with a radial passage 117 communicating with the passage 115 and which in turn communicates with an axially extending passage 118 extending therefrom into the cover 46 to a radial passage 120 in the outboard wall thereof. The radial passage 120 opens into the annular brake cylinder 92 formed in the cover 46 and with the base of the brake piston 88. Thus, a passage means is disposed in the hub which establishes fluid communication between the input port 100 on the spacer ring 37 and an outlet into the brake cylinder 92 so that brake apply pressure at the input port 100 will activate the brake pack 78. As is illustrated, the hub assembly 34, planet gear carrier 42 and cover 46 are separate components secured together and, accordingly, at the interfaces in the passages 115, 117, 118, small O-rings are disposed in grooves to preclude leakage past the abutting components. Additionally, a bleed orifice 122 is disposed in the radial passage 120 of the cover 46 near the center of the axle shaft 30 for the purpose of allowing the brake fluid to continually circulate through the passages and lines described above in order to prevent congealing of the brake fluid under cold operating conditions. The orifice 122 bleeds to a cavity 124 defined within the cover 46 surrounding the outboard end of the axle shaft 30.

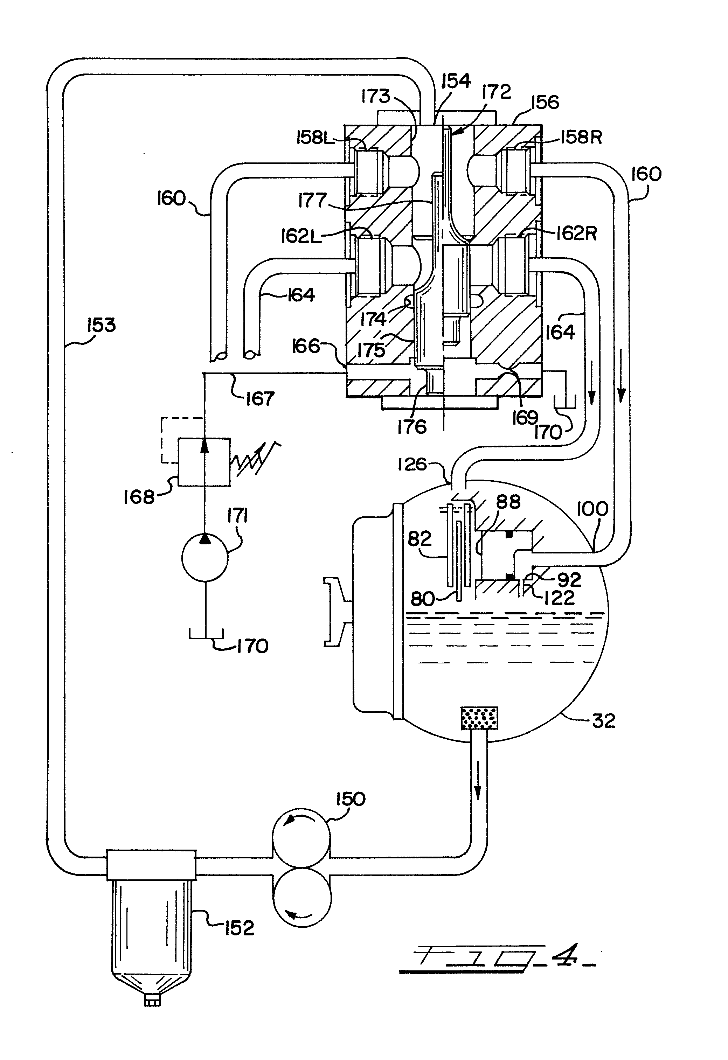

Operating fluid for cooling and lubricating the brake pack 78, as well as the various bearings 35, 36 and 70, is also supplied from the same fluid system to an input port 126 (Figure 3) which is located on the top side of the spacer ring 37, that is, rotated 90° from the brake fluid input port 100 shown in Figure 2. The input port 126 communicates with a second cavity 128 defined by the outside wall of the spacer ring 37, the hub 34, and a pair of face seals 129, of the conventional type shown, for example, in the aforementioned Sidles patent, each comprising a metal seal ring 130 disposed within a rubber compression ring 131, the radial faces of the rings 130 being disposed in mating relation within the annular outturned edges 132 respectively of the seal ring 37 and wheel hub assembly 34. Thus, a seal is maintained between the hub and spacer ring sealing the exterior of the axle assembly from the interior while permitting relative rotation therebetween. The second cavity 128 is also sealed from the first cavity 107 by the seals 110. The wheel hub 34 is provided with a port 134 communicating via radial passage 135 with the second cavity 128. Thus, a second fluid tight passage is provided between the fixed spacer ring 37 and the rotating hub assembly 34 for the passage of lubricant which also has the benefit of cooling the seals 129. Further, due to its axially adjacent location, leakage from the adjacent high pressure brake apply cavity 107 will leak into the low pressure second cavity rather than exteriorly of the axle. A tube 136 connects the port 134 with a second port 137 opening into an axially extending passage 138 in the circumferential wall of the wheel hub assembly and extending into the planet carrier assembly 42 whereat the passage 138 intersects a radial passage 139 in the wall 44 of the planet carrier 42. The planet carrier passage 139 communicates with an axially extending passage 140 predominately in the cover 46 intersecting a radial passage 142 in the cover which in turn has an unrestricted outlet as at 143 into the cavity 124 adjacent the end of the axle shaft 30. This provides for relatively continuous lubrication and cooling of the gears, bearings and the brake discs.

In the latter regard, the inner portion of the brake discs 80 and 82 are each radially slotted in a conventional manner to allow lubricant flow adjacent the spline 60 on the axle shaft 30 to permit flow to each disc and radially among the discs and filling at least the lower half of the cavity 76. The lubricant flows past the backing plate 94 to an internal cavity 144 formed within the planet gear carrier and lubricates the bearings 70 located between the stub shaft 72 and the planet gear 68. The lubricant further fills the ring gear containing cavity 146 of the wheel hub assembly and lubricates the wheel hub bearings 35 and 36. With all the cavities 76, 144, 146 filled up to the level of the bore of the spindle 33, the lubricant is sent back to the differential housing 32 along the clearance space 148 between the axle shaft 30 and the spindle 33. In this connection it is noted that even though the cavities fill up only half way, since all of the bearings 35, 36, and 70 and the sun and planet gears 60, 68, as well as both sets of brake discs 80 and 82, rotate during operation of the vehicle (except the inner races of bearings 35, 36), more than adequate lubrication and cooling of all of these components is maintained. As previously indicated, the metallic face seals 129 between the hub and spacer ring are also cooled by the lubricant passing through the cavity 128 behind them. Due to its pressurization, the cavity 128 is substantially filled during operation.

Referring now to Figure 4, there is shown schematically the combined operating fluid system which actuates the brake pack 78, provides the lubrication and cooling for the entire axle drive and brake assembly, and also lubricates the differential gearing (not shown) within the differential housing 32. (The term "operating" is used to distinguish from the vehicle hydraulic control systems and their fluids). Of significant note, is that a single operating fluid, preferably an extreme pressure (EP) gear lubricant of high viscosity such as 85W-140, is used to provide all these functions. Viewed in detail, the operating fluid is supplied to a transmission driven gear pump 150 from the differential housing 32 of the axle assembly which functions as a reservoir. The operating fluid is pumped through a filter 152 and a pressure line 153 into the input port schematically illustrated at 154 of a brake apply valve 156. The brake apply valve 156 has left and right output ports 158L, 158R respectively, which are connected via tubes 160 to the brake apply input ports 100 at the left and right wheels of the axle respectively. Adjacent the brake output ports 158 are lubricant output ports 162L and 162R which are connected respectively by tubes 164 to the lubrication input port 126 on the spacer ring 37. Further spaced from the brake apply ports 158 is an input port 166 which is connected to a pilot pressure line 167 in turn connected to a pedal actuated brake pilot control valve 168 having a linearly increasing pressure output with pedal stroke located in the operator's compartment of the vehicle. In the brake release position of the pedal, the control valve maintains a small amount of continuous circulation in the pilot control line 168 which flows through an orifice 169 on the right side of the valve 156 back to the transmission hydraulic fluid reservoir 170. It is noted in this regard that the brake pilot control system operates on hydraulic fluid from the transmission hydraulic system pump 171 rather than on the gear lubricant used on the operating fluid side of the brake apply valve 156. A sliding valve spool 172 is disposed in a relatively close fit in spool bore 173, the valve spool 172 being shown at the extreme limits of its travel respectively on the left and right sides of the valve 156 illustrated in Figure 4. Since the pilot control system operates on transmission hydraulic fluid, an annular groove 174 is disposed in the spool bore 173 between the pilot control input port 166 and the operating fluid lubricating output ports 162. The groove 174 is connected to the operating fluid inlet 154 as by an internal passage in the valve body (not shown) which should be sufficient to provide adequate separation of the fluids since the pressure differential across the spool body is zero because the control pressure and inlet pressure are nearly always equal. The valve spool 172 comprises a cylindrical body portion 175 slidingly fit in the valve bore 173 between the lubricant output ports 162 and the control pressure port 166, a short control side axial stem of smaller diameter than the body 175 extending therefrom to the control side and an elongated operating side axial stem 177 extending from the body portion to the operating fluid side. The relative axial lengths of the body 175, control side stem 176, and operating side stem 177 are configured so that a part of the body portion is always between the ports 162 and 166 and covering the annular groove 174, that when the control side stem 176 contacts the end of the valve 156 on the control pressure side, as shown on the left side of the valve in Figure 4, both operating fluid output ports 162, 158 are open, and that when the operating side stem 177 contacts the end of the valve 156 on the operating side, as shown on the right side of the valve in Figure 4, the body portion 175 closes off the lubricant output ports 162 while leaving the brake apply output ports 158 open.

In operation of the operating fluid system, the pump 150 removes gear lubricant operating fluid from the differential housing 32 and pumps it through the filter 152 and into the operating side of the brake apply valve 156 at input port 154. Since the pilot control circuit pressure in the line 168 is maintained at a relatively low level in the absence of a braking signal from the operator, the valve spool 172 moves toward the control side limit of travel, the control side stem 176 preventing the body 175 of the spool 172 from closing off the pilot control pressure input port 166 and the orifice 169 so that control pressure hydraulic fluid is circulated through the control pressure side of the brake apply valve 156 continually. The valve spool acts as a pressure regulator to maintain the operating side at the same pressure as the control side and since there is little restriction in the lubricating fluid passages, the gear lubricant operating fluid will be pumped past the operating side stem 177 of the valve spool 172 through the lubricating output ports 162 and circulated through the line 164 into the lubricating input port 126 on the spacer ring 37 (Figure 3) and thereafter through the cavity 128 and the above-described hub assembly passages into the cavity 124 adjacent the axle shaft 30 and brake pack 78 at the outboard end of the axle assembly. A small amount of lubricant also flows through the brake apply passages and out the orifice 123 to the cavity 124. When the operator depresses the brake pedal, the pilot control valve 168 increases the pressure in the pilot control line 168, generally proportional to the brake pedal travel. This pressure forces the valve spool 172 momentarily to the operating side limit of travel, as shown in the right side of Figure 4, so that the spool body 175 closes off the lubricating ports 162 while leaving the brake ports 158 open. Since the brake circuit is restricted, opening only to the brake cylinder 92 and the orifice 123, the pressure on the operating side of the valve spool 172 will quickly build up until it equals the pilot pressure in the line 166, simultaneously pressurizing the brake line 160 and ultimately the brake annular cylinder 92 forcing the brake piston 88 against the brake pack 88. The pressure at the operating fluid inlet 154 will continue to increase until it overcomes the pilot pressure on the pilot side of the valve spool 172 causing the spool to move downwardly and opening the lubricant ports 162 so that the flow from the operating fluid circuit again exits through the lubricating output ports 162, the valve spool 172 reaching an equilibrium position with the ports 162 partially open. Thus, during braking, the flow of lubricant is momentarily cut off but is immediately resumed after the pressure in the operating fluid circuit 153 rises to equalize the pilot pressure in line 168. Then, lubrication is resumed no matter how long braking lasts.

To service the brake pack 78, the cover 46 is removed from the planet gear carrier 42 by means of removing the bolts 43 from the radial wall 44. This removes not only the cover but also the brake piston assembly 88 and fully exposes the cavity 76 and the brake pack 78. Thus, the discs 80 and 82 can be removed merely by reaching in and pulling them out. New discs can be reinstalled on the cooperating splines of the axle shaft 30 and of the cavity wall 74 and the cover 46 replaced. Thus complete servicing of the brake pack 78 can be obtained without any removal of the planet gear assembly, the drive wheel and without disturbing the brake piston within the cover 46.

CLAIMS:

1. A drive assembly for a vehicle having a nonrotatable axle housing, a drive shaft, a wheel hub rotatably mounted on the housing, and a planetary gear drive from the axle shaft to the hub, wherein the sun gear is on the drive shaft, the ring gear is fixed against rotation to the housing, the planet gear carrier is drivingly coupled to the wheel hub, and the planet gears mounted on the carrier are engaged between the sun and ring gears, characterised in that a brake pack (78) is disposed between the planet carrier (42) and the drive shaft (30), the brake pack comprising two interleaved sets of axially movable brake discs (80,82), one (80) of the disc sets being mounted for rotation with the axle shaft (30) and the other (82) disc set being mounted for rotation with the planet carrier (42); and brake actuating means (88) operatively associated with the brake pack (78) to selectively effect frictional contact between the brake disc sets (80,82) and thereby braking the wheel hub (34) relative to the axle housing (32).

2. A drive assembly according to claim 1, characterised in that the brake pack (78) is disposed axially outboard of the engagement between the sun gear (60) and the planet gears (68).

3. A drive assembly according to claim 1 or claim 2, characterised in that the planet carrier (42) has a brake pack receiving cavity (76) on the outboard side thereof from the mounting of the planet gears (68) thereto, the other (82) disc set being nonrotatably mounted therewithin, a removable cover (46) being mounted on the planet carrier and enclosing the outboard end of the cavity (76).

4. A drive assembly according to claim 3, characterised in that a stop (94) is located in the cavity (76) between the brake pack (78) and the planetary gears (68) and the brake actuating means (88) operates against the outboard side of the brake pack (78) to move the brake pack (78) against the stop to effect frictional contact between the disc sets (80,82).

5. A drive assembly according to claim 4, characterised in that the brake actuating means (88) is mounted on the cover (46).

6. A drive assembly according to claim 5, characterised in that the cover (46) includes a fluid pressure cylinder (92) adapted for association with a hydraulic pressure control and the brake actuating means comprises a piston (88) operably received in the cylinder (92) and disposed for engagement with the brake pack (78), a fluid passage (111-120) being disposed within the cover (46), planetary carrier (42) and hub (34) establishing fluid communication between the cylinder (92) and an inboard pressure input port (100) associated with the axle housing (32).

7. A drive assembly according to claim 1, characterised in that the planetary carrier (42) has an annular wall (74) disposed about the axle shaft (30) to define a cylindrical cavity (76) in the planetary carrier (42), the cavity (76) being located outboard of the planetary gears (68), the brake pack (78) being received in the cavity (76) with the other (82) set of discs keyed to the annular wall (74).

8. A drive assembly according to any of claims 3 to 5, characterised in that the cover (46) includes a cylindrical portion (92) associated with a source of fluid pressure; the brake actuating means is a piston (88) operatively received in the cylindrical portion; spring means (98) are associated with the disc sets (80,82) for operatively separating the discs (80,82) in the absence of substantial fluid pressure from the fluid source; and automatic slack adjusting means (178) are associated with the cover (46) and the piston (88) for regulating the separation of the discs (80,82) in the absence of fluid actuating pressure in the cylinder (92).

9. A drive assembly according to any preceding claim, characterised in that a source (150) of lubricating fluid pressure is disposed on the vehicle and fluid passages (134-143) are provided in the wheel hub in communication with the sealed cavity and disposed to effect lubrication of the brake pack (78) and operatively connected to the lubricating fluid pressure source, the lubricating fluid and the brake control fluid both comprising gear lubricant withdrawn from the axle housing (32).

10. A drive assembly according to claim 9, characterised in that a single hydraulic valve (156) provides both the lubricating fluid and the brake control fluid.

FIG-3-
FIG-1-
10
12
14
15
18
20
22
24
26
28
30
33
34
37
39
42
46
78
80
82
107
108
110
124
126
128
129
130
131
132
134
135
136
137
138
139
140
142
143
2
3

FIG-2
18
40
41
43
42
48
50
52
62
70
71
72
45
56
36
34
35
110
129
128
37
39
32
33
30
38
101
100
103
107
111
112
108
113
114
115
63
64
65
66
67
148
60
144
94
96
61
146
82
83
98
74
76
117
44
68
180
178
185
186
187
183
182
80
81
122
124
90
87
92
88
86
46
120
78
118

154
172
173
156
158L
158R
160
160
177
162L
162R
164
164
174
153
175
166
167
176
169
170
170
126
168
171
88
82
100
92
80
122
32
150
152


FIG-4

# 0084732

European Patent Office

## EUROPEAN SEARCH REPORT

Application number

EP 82 30 6918

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| X | US-A-4 010 830 (LOGUS et al.) * Column 2, lines 45-50 ; column 2, line 67 - column 3, line 42 ; figure * | 1-9 | B 60 T 1/06 |
| A | FR-A-2 322 757 (GKN AXLES) * Figure 1, reference 52 * | 8 | |
| D,A | US-A-4 142 615 (SIDLES et al.) | | |
| D,A | US-A-4 037 694 (KEESE) | | |
| | | | TECHNICAL FIELDS SEARCHED (Int. Cl. 3) |
| | | | B 60 T 1/00 |

The present search report has been drawn up for all claims

| Place of search | Date of completion of the search | Examiner |
|---|---|---|
| BERLIN | 28-02-1983 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82